(19) Europäisches Patentamt
European Patent Office
Office européen des brevets

(11) **EP 2 192 555 B1**

(12) **FASCICULE DE BREVET EUROPEEN**

(45) Date de publication et mention
de la délivrance du brevet:
**18.01.2012 Bulletin 2012/03**

(51) Int Cl.:
*G06T 17/05* (2011.01)    *G06T 11/40* (2006.01)

(21) Numéro de dépôt: **09177398.6**

(22) Date de dépôt: **27.11.2009**

(54) **Affichage de données paramétrées**

Display of parameterised data

Anzeige von parametrisierten Daten

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **28.11.2008 FR 0858144**

(43) Date de publication de la demande:
**02.06.2010 Bulletin 2010/22**

(73) Titulaire: **Newscape Technology
22300 Lannion (FR)**

(72) Inventeurs:
• **Klaine, Luc
22300 Lannion (FR)**
• **Thouvenin, Olivier
22300 Lannion (FR)**

(74) Mandataire: **Cabinet Plasseraud
52, rue de la Victoire
75440 Paris Cedex 09 (FR)**

(56) Documents cités:
**US-A- 4 972 319    US-A- 5 040 130
US-A- 5 418 897    US-B1- 7 353 114**

• KUI LIU ET AL: "An algorithm for polygon clipping, and for determining polygon intersections and unions" COMPUTERS AND GEOSCIENCES, PERGAMON PRESS, OXFORD, GB LNKD- DOI:10.1016/J.CAGEO.2006.08.008, vol. 33, no. 5, 10 avril 2007 (2007-04-10) , pages 589-598, XP022025372 ISSN: 0098-3004
• I.E. SUTHERLAND ET AL.: "Reentrant Polygon Clipping" COMMUNICATIONS OF THE ACM, vol. 17, no. 1, 1 janvier 1974 (1974-01-01), pages 32-42, XP040119026 ACM, 2 PENN PLAZA, SUITE 701 - NEW YORK USA

**Description**

La présente invention se rapporte au domaine de l'affichage numérique d'objets paramétrés.

L'invention est plus particulièrement adaptée aux applications embarquées, par exemple de cartographie numérique, sur des terminaux mobiles, par exemple des téléphones portables, assistant personnel numérique ou PDA etc. De telles applications sont par exemple mises en oeuvre dans des terminaux mobiles aptes à communiquer avec un serveur.

Il est connu d'afficher des objets tridimensionnels, ces objets indicés i représentant par exemple une pluralité d'immeubles respectifs. Ces objets tridimensionnels sont paramétrés par une liste de données d'images. Chaque objet au format boite (indicé i) est considéré comme un cylindre de hauteur $z_i$ et de base un polygone. Pour chacun de ces objets, la liste comporte une valeur de paramètre de hauteur $z_i$, ainsi que les coordonnées 2D des points de la base polygonale $x_{ij}$, $y_{ij}$, j indiçant les points de la base. La liste de données d'image peut en outre comprendre des coordonnées paramétrant d'autres objets, selon un autre format (format objet), des paramètres de vecteurs normaux $\vec{n_i}$ à des surfaces des objets à représenter, des textures $t_i$, des couleurs $c_i$, ou autre.

Des paramètres de navigation définissant le point de vue selon lequel un utilisateur souhaite voir afficher les objets, sont déterminés à partir de données reçues d'une interface utilisateur.

A partir de la liste des données d'image et des paramètres de navigation souhaités, une représentation 3D est calculée, par exemple par un moteur graphique ou moteur 3D.

L'affichage sur un écran des valeurs de pixels calculées permet ainsi de représenter en deux dimensions les objets tridimensionnels selon les paramètres de navigation souhaités.

Les objets à représenter peuvent alternativement être des objets bidimensionnels, paramétrés par des données bidimensionnelles. Les paramètres de navigation peuvent alors définir une position et une échelle par exemple et les calculs permettent d'obtenir une représentation 2D.

Ces calculs sont bien connus de l'homme du métier notamment de US-7,353,114, US-4,972,319 et Kui Liu et al (XP0022025372). La plupart des terminaux comprennent des moyens de calcul du type moteur graphique capables d'effectuer ces calculs.

L'invention a pour objectif d'accélérer le temps de calcul de la représentation.

Il est proposé un procédé de traitement, en vue d'un affichage sur un écran d'un terminal d'une image numérique représentant au moins une partie d'un ensemble d'objets d'un point de vue défini par des paramètres de navigation, cet ensemble d'objets étant paramétré par une liste de données d'image comprenant, pour au moins un objet dudit ensemble, des coordonnées de points d'un polygone dans un plan,
dans lequel
ce plan est partitionné en zones,
chaque polygone appartenant à une pluralité de zones est stocké dans une mémoire sous la forme d'une pluralité de polygones découpés, chaque polygone découpé appartenant à une seule zone, de sorte que chaque polygone stocké dans cette mémoire est associé à une seule zone,
ce procédé étant conforme à la revendication 1.

Ainsi, on dispose de coordonnées de points classées par zones, de sorte que le calcul de la représentation à afficher peut être effectué à partir seulement de points correspondant à certaines zones. Les points appartenant à des zones dont on sait qu'elles ne seront pas affichées sont filtrés avant le calcul de la représentation.

On peut ainsi éviter d'effectuer des calculs fastidieux, ce qui peut être particulièrement intéressant lorsque ces calculs sont effectués par un terminal relativement pauvre en ressources mémoire et/ou de calcul.

On peut prévoir plusieurs niveaux de résolution, chaque niveau de résolution correspondant à un ensemble de zones constituant une partition du plan et à un ensemble de polygones stockés, chaque polygone stocké dudit ensemble appartenant à une seule zone dudit ensemble de zones. Alternativement, une seule partition est prévue.

Avantageusement, la liste de données d'image comprend, pour au moins une zone, un jeu d'au moins une texture associé à cette zone. Ainsi, des données de texture sont également classées par zone, ce qui permet d'éviter d'avoir à télécharger toutes les données de textures et d'effectuer les calculs de représentation à partir de toutes les données de texture. On élimine les textures dont on sait qu'elles correspondent à des informations qui ne seront pas affichées à l'écran.

En effet, les données de texture peuvent être relativement volumineuses, par exemple les données de texture peuvent comprendre une seule image de taille en octets élevée, ce qui peut être préoccupant dans le cas d'un terminal relativement pauvre en ressources mémoire et/ou de calcul. En conservant seulement les données de texture pertinentes souhaité, on peut gagner du temps de calcul.

Il est connu de l'inventeur de stocker pour chaque objet, un jeu de textures associé à cet objet. Le stockage par zone présente l'avantage de réduire le nombre de lectures en mémoire et de limiter le nombre de textures lors des calculs (la plupart des moteurs graphiques sont limités à un nombre de textures prédéfini), ainsi que le volume des données de texture chargées. En effet, lorsqu'une texture par bâtiment est chargée, si l'utilisateur souhaite voir afficher une ville entière, un grand nombre de lectures mémoire sera effectué, le moteur graphique risque d'être saturé en nombre de textures, le volume de données chargées risque d'être élevé, les données de texture chargées auront une résolution trop élevée par rapport à l'affichage possible.

Pour chaque zone, les données de texture peuvent comprendre une image de relativement faible taille en octets, ou bien plusieurs de ces images. Le nombre d'images par zone peut avantageusement être le même quelque soit la zone, de sorte que le volume (en octets) attendu des données reste constant d'une zone à l'autre.

Une image utilisée comme données de texture peut être obtenue par exemple en photographiant une région géographique réelle.

Les objets à représenter peuvent être bidimensionnels ou tridimensionnels.

De manière générale, ce procédé permet de répartir des données d'image par zone, de sorte que, pour un affichage souhaité selon un point de vue donné, on peut ne conserver pour le calcul d'une représentation que les données d'image dont on sait qu'elles correspondent à une information qui sera affichée à l'écran.

Selon un autre aspect, il est proposé un dispositif de traitement, en vue d'un affichage sur un écran d'un terminal d'une image numérique représentant au moins une partie d'un ensemble d'objets d'un point de vue défini par des paramètres de navigation, cet ensemble d'objet étant paramétré par une liste de données d'image comprenant, pour au moins un objet dudit ensemble, des coordonnées de points d'un polygone dans un plan, ce plan étant partitionné en un ensemble de zones, le dispositif comprenant

une mémoire structurée par zones, chaque polygone appartenant à une pluralité de zones étant stocké dans cette mémoire sous la forme d'une pluralité de polygones découpés, chaque polygone découpé appartenant à une seule zone, de sorte que chaque polygone stocké dans cette mémoire est associé à une seule zone,

des moyens de traitement pour déterminer un jeu d'au moins une zone dudit plan correspondant aux paramètres de navigation,

des moyens de sélection agencés pour choisir, pour chaque zone du jeu de zones, les coordonnées des points des polygones stockés dans la mémoire et associés à cette zone, pour le calcul d'une représentation, destinée à être affichée sur l'écran, de l'ensemble d'objets selon ces paramètres de navigation.

Ce dispositif peut être intégré dans un serveur. Ce dispositif peut être partie intégré dans un serveur, et en partie intégré dans un terminal. Ce dispositif peut être intégré dans un terminal. Dans ce dernier cas, la mémoire peut être intégrée dans une carte mémoire du terminal, voire dans un support mémoire amovible de type clé USB.

La mémoire structurée par zones peut être une partie d'une unité de mémoire.

Selon encore un autre aspect, l'invention a pour objet un procédé, mis en oeuvre par des moyens informatiques, de pré-traitement d'une liste de données d'images paramétrant un ensemble d'objets, en vue d'un affichage sur un écran d'un terminal d'une image numérique représentant au moins une partie dudit ensemble d'objets, cette liste de données d'image comprenant, pour au moins un objet dudit ensemble, des coordonnées de points d'un polygone dans un plan, ce plan étant partitionné en un ensemble de zones. Pour au moins un polygone de la liste de données d'images :

- on teste si ce polygone appartient à une pluralité de zones,
- si le test montre que le polygone appartient à une pluralité de zones, on détermine, à partir des coordonnées des points dudit polygone, des coordonnées de points d'un polygone découpé, chaque polygone découpé appartenant à une seule zone associée, et on stocke ces polygones découpés dans une mémoire structurée par zones,
- si le test montre que le polygone appartient à une seule zone, on stocke ce polygone dans cette mémoire,

de sorte que chaque polygone stocké dans cette mémoire appartient à une seule zone associée.

Par « un » polygone découpé, on entend bien entendu un ou plusieurs. Par exemple, on peut prévoir de scinder le polygone en autant de polygones découpés qu'il y a de zones dans la pluralité de zones. Par exemple, ce procédé est susceptible d'être appliqué zone par zone, de sorte que pour chaque zone, on peut découper un polygone de façon à ne conserver que la partie circonscrite dans cette zone.

En scindant les polygones appartenant à plusieurs zones, on peut obtenir des coordonnées de points de listes classées par zone, chaque liste correspondant à un polygone circonscrit dans une zone. Ces coordonnées ainsi classées sont susceptibles d'être utilisées pour les étapes du procédé décrit ci-dessus.

Le procédé de prétraitement peut être effectué dans un serveur par exemple, et les résultats obtenus conservés dans ce serveur en vue de téléchargement depuis des terminaux.

Avantageusement, pour déterminer des coordonnées de points d'un polygone découpé à partir de coordonnées de points d'un polygone appartenant à une pluralité de zones, pour une zone de ladite pluralité :

- on détermine les points d'intersections de segments du polygone avec les frontières de ladite zone,
- on insère ces points d'intersection dans une liste de points ordonnée correspondant au polygone, entre les points extrémités des segments intersectés correspondants,
- on supprime de ladite liste les points n'appartenant pas à ladite zone.

Avantageusement et de façon non limitative, on peut en outre prévoir de:

- rechercher si des points de la liste appartiennent à un segment défini par d'autres points de la liste, et le cas échéant on insère ces points dans la liste, entre ces autres points,
- rechercher les points apparaissant en double dans la liste, et entre lesquels il n'y a pas d'autre point apparaissant en double, et le cas échéant on définit une liste des points entre les deux occurrences desdits points apparaissant en double, et une liste comprenant les autres points restants.

L'invention n'est en rien limitée par ce procédé de découpage.

Selon encore un autre aspect, il est proposé un dispositif de prétraitement d'une liste de données d'images paramétrant un ensemble d'objets, en vue d'un affichage sur un écran d'un terminal d'une image numérique représentant au moins une partie dudit ensemble d'objets, cette liste de données d'image comprenant, pour au moins un objet dudit ensemble, des coordonnées de points d'un polygone dans un plan, ce plan étant partitionné en un ensemble de zones. Ce dispositif comprend une mémoire structurée par zones, et des moyens de traitement agencés pour effectuer les étapes du procédé décrit ci-dessus, pour au moins un polygone de la liste de données d'images.

Selon encore un autre aspect, il est proposé une mémoire de stockage d'une liste de données d'images paramétrant un ensemble d'objets, pour l'affichage sur un écran d'un terminal d'une image numérique représentant au moins une partie dudit ensemble d'objets. La liste de données d'image comprend, pour au moins un objet dudit ensemble, des coordonnées de points d'un polygone dans un plan, et la mémoire est structurée par zones dudit plan. Chaque polygone appartenant à une pluralité de zones est stocké sous la forme d'une pluralité de polygones découpés, chaque polygone découpé appartenant à une seule zone, de sorte que chaque polygone stocké dans la mémoire appartient à une seule zone associée.

Avantageusement, la mémoire étant agencée de façon à stocker en outre, pour au moins une zone, un jeu d'au moins une texture associé à cette zone.

Une telle structure de mémoire dans laquelle les listes de points - et éventuellement d'autres données d'image - sont classées par zone permet d'appliquer le procédé décrit ci-dessus.

Selon encore un autre aspect, l'invention a pour objet un programme d'ordinateur comprenant des instructions pour mettre en oeuvre les étapes d'un procédé selon un mode de réalisation de l'invention, lors d'une exécution du programme par des moyens de traitement.

D'autres caractéristiques et avantages de l'invention apparaîtront encore à la lecture de la description qui va suivre. Celle-ci est purement illustrative et doit être lue en regard des dessins annexés sur lesquels :

- La figure 1 est un algorithme d'un exemple de procédé selon un mode de réalisation de l'invention ;
- La figure 2 montre un exemple de dispositif selon un mode de réalisation de l'invention, en communication avec un terminal;
- La figure 3 montre un terminal et un serveur selon un mode de réalisation de l'invention ;
- La figure 4 est un algorithme d'un exemple de procédé selon un mode de réalisation de l'invention ;
- La figure 5 représente un exemple de partition d'un plan ;
- Les figures 6 à 8 montrent trois exemples de partitions, à des niveaux de résolution différents ;
- Les figures 9 et 10 montrent deux exemples de partitions, à des niveaux de résolution différents ;
- La figure 11 montre un exemple de polygone appartenant à une pluralité de zones ;
- Les figures 12 à 14 illustrent un exemple de procédé de détermination de listes de points de polygones découpés à partir des points d'un polygone appartenant à une pluralité de zones.

Des références identiques peuvent être utilisées d'une figure à l'autre, pour désigner des éléments identiques ou comparables.

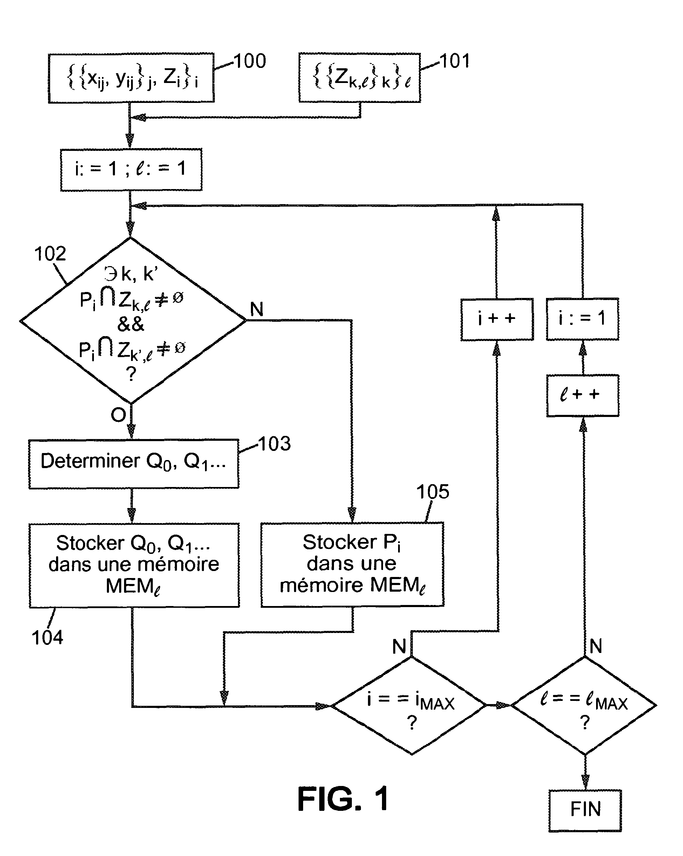

En référence à la figure 1, est représenté un organigramme d'un exemple de procédé de prétraitement. Une liste de données d'images reçue lors d'une étape 100 permet de paramétrer des objets tridimensionnels.

Ces objets peuvent obéir à un format boite ou à un format objet. Chaque objet au format boite, indicé i, est considéré comme un cylindre de hauteur $z_i$ et de base un polygone. Pour chacun de ces objets, la liste comporte une valeur de paramètre de hauteur $z_i$, ainsi que les coordonnées dans un plan des points de la base polygonale $x_{ij}$, $y_{ij}$, j indiçant les points de la base. La liste de données d'image peut en outre comprendre des coordonnées paramétrant les objets au format objet (c'est à dire les coordonnées d'un certain nombre de points pour chaque objet), des paramètres de vecteurs normaux $\vec{n_j}$ à des surfaces des objets à représenter, des couleurs $c_i$, des données de texture, ou autre.

Sont également reçues un certains nombre de partitions du plan, chaque partition correspondant à un niveau de résolution l. Chaque partition comporte des données permettant de déterminer des zones $z_{k,l}$, k indiçant la position de chaque zone dans le plan. Ces données peuvent par exemple comprendre un nombre de lignes et un nombre de colonnes.

Pour chaque niveau de résolution l, et pour chaque objet du plan, on recherche si cet objet appartient à une ou plusieurs zones, lors d'une étape de test 102. Des étapes classiques d'initialisation, de test, et d'incrémentation sont effectuées de façon à parcourir tous les objets de l'ensemble d'objets paramétrés par une base polygonale, et tous les niveaux de résolution proposés.

Selon un mode de réalisation alternatif et non représenté sur la figure 1, on parcoure les niveaux de résolution et les zones : pour chaque zone d'un niveau de résolution donné, on recherche si il existe un polygone dans cette zone, et, pour chaque polygone ainsi trouvé, on effectue un découpage de façon à ne conserver que la partie de ce polygone qui est circonscrite dans la zone.

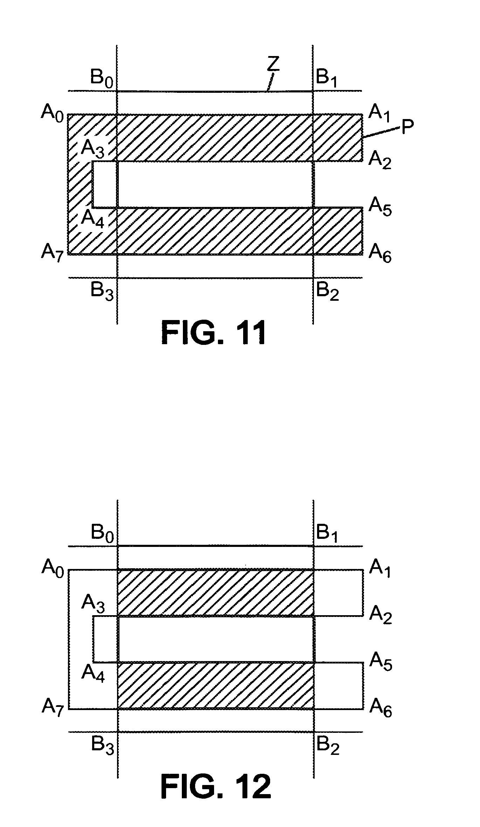

Pour revenir à l'exemple de la figure 1, dans lequel on parcoure les niveaux de résolution et les polygones, si le test 102 montre que le polygone intersecte plusieurs zones, alors on effectue un découpage de ce polygone de façon à obtenir des polygones découpés appartenant chacun à une seule zone (étape 103). Les calculs mis en oeuvre seront détaillés en référence aux figures 11 à 14.

Les polygones découpés sont stockés dans une mémoire structurée par niveaux de résolution, et pour chaque niveau de résolution, structurée par zone correspondantes, de façon à associer chaque polygone découpé à une zone donnée d'un niveau de résolution donné.

Si le test 102 montre que le polygone intersecte une seule zone, alors ce polygone est stocké tel quel (sans découpage) dans la mémoire, de façon à associer ce polygone à la zone intersectée.

Aussi, la partie de mémoire correspondant à un niveau de résolution donnée stocke-t-elle, pour chaque zone, 0, 1 ou plusieurs polygones appartenant uniquement à cette zone.

Pour les objets au format objet appartenant à plusieurs zones, un traitement préliminaire peut être effectué de façon à obtenir, à partir des coordonnées de points de ces objets, une ou plusieurs surfaces polygonales projetées dans le plan (z=0). Le traitement préliminaire peut comprendre une étape de projection, dans le plan (z=0), de chacune des faces de l'objet au format objet. Les étapes 102 à 105 du procédé décrit ci-dessus peuvent alors être appliquées à chacune de ces surfaces polygonales projetées. Puis, à partir des polygones projetés et découpés, on détermine des coordonnées tridimensionnelles de points. Les objets au format objet sont ainsi scindés en plusieurs objets, chaque objet scindé appartenant à une seule zone.

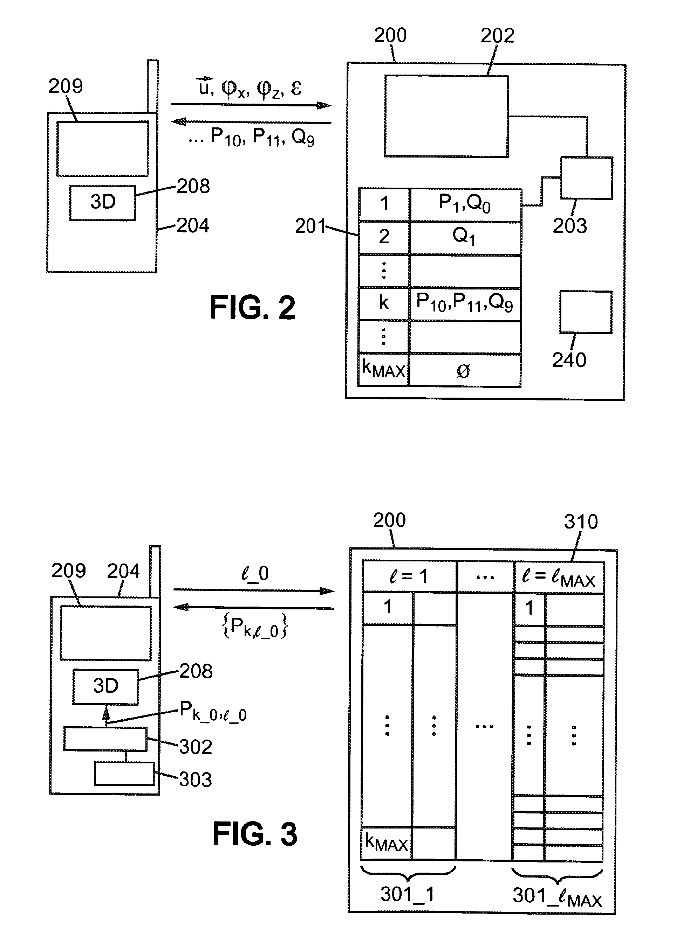

En référence à la figure 2, un dispositif de traitement 200, par exemple un serveur, est en communication avec un terminal 204, par exemple un téléphone portable, un assistant personnel de type PDA (« Personal Digital Assistant » en anglais), ordinateur portable ou autre.

Dans cet exemple, le terminal 204 est connu de l'art antérieur, et comporte de façon classique un écran 209, un moteur graphique 208 et une antenne.

Le serveur 200 comporte une mémoire 201, dont le contenu est obtenu par des moyens de traitement 240, par exemple un processeur. Ces moyens de traitement 240 sont agencés pour effectuer les étapes du procédé de la figure 1.

La mémoire 201 est structurée par zones, chaque zone étant indicée k. Pour une zone k donnée, sont conservées en mémoire zéro, une ou plusieurs listes de points, chaque liste de points correspondant à un polygone circonscrit dans cette zone k donnée. Les polygones ainsi associés à une zone donnée peuvent avoir été déterminés par le processeur 240, par découpage d'un polygone appartenant à plusieurs zones.

Lorsqu'un utilisateur du terminal souhaite visualiser une scène depuis un point de vue donné, le terminal détermine à partir de données reçues d'une interface utilisateur des paramètres de navigation $\vec{u}$, $\varphi_x$, $\varphi_z$ et $\varepsilon$ correspondant respectivement à une translation, deux rotations, et une homothétie (zoom).

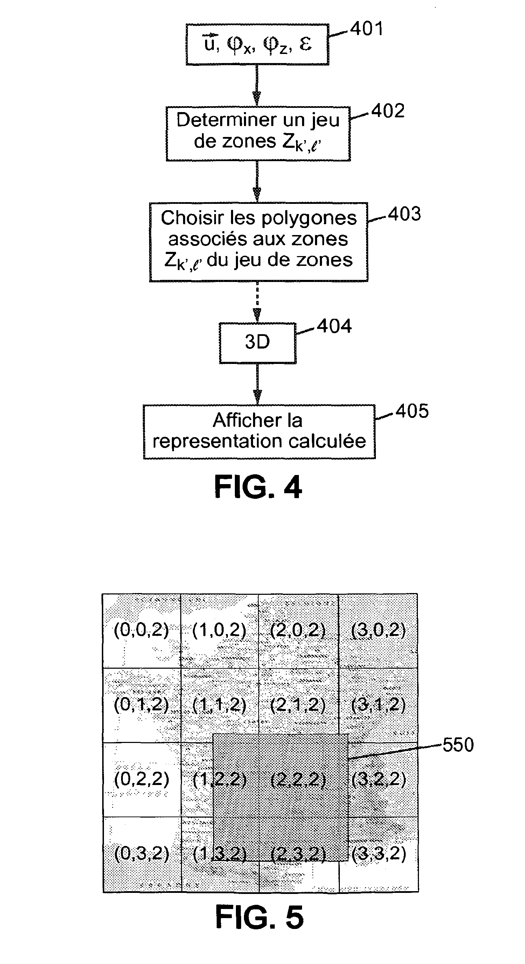

Ces paramètres de navigation sont transmis à des moyens de traitement 202 du serveur 200, par exemple un processeur. Ce processeur 202 reçoit ces paramètres de navigation (étape 401 sur la figure 4) et détermine à partir de ces paramètres de navigation un jeu de zones (étape 402 sur la figure 4). Les zones de ce jeu de zones sont les zones correspondant à des données d'image susceptibles d'avoir une incidence sur la représentation à afficher. Par exemple, si les paramètres de navigation correspondent à une partie en bas à droite du plan, alors les zones en haut à gauche du plan peuvent d'ores et déjà être éliminées. Les calculs du moteur graphique 208 sont ainsi effectués à partir d'un volume de données réduit, permettant ainsi de gagner du temps de calcul pour un affichage équivalent.

Des moyens de sélection 203, par exemple un processeur, permettent de choisir des listes de points correspondant à des polygones circonscrits dans les zones du jeu de zones (étape 403 sur la figure 4). Dans le cas d'un polygone dont la plus grande partie appartient à une zone exclue du jeu de zones, on évite au moteur graphique d'effectuer des calculs pour les points de ce polygone exclus du jeu de zones.

Les listes de points des polygones sélectionnés sont envoyées au terminal, pour le calcul d'une représentation par le moteur graphique 208 (étape 404 sur la figure 4), en vue d'un affichage sur l'écran 209 (étape 405 sur la figure 4).

La figure 3 montre un terminal 204 incorporant des moyens de traitement 303 pour déterminer, à partir de paramètres de navigation obtenus d'une interface utilisateur, un jeu d'au moins une zone et d'au maximum 9 zones. Préalablement à l'étape de détermination du jeu de zones, on détermine un niveau de résolution en fonction des paramètres de navigation, ce niveau de résolution étant tel que le nombre de zones est le plus élevé possible tout en étant inférieur à 9.

Le terminal envoie alors à un serveur un indice I_0 de ce niveau de résolution. Le serveur 200 comporte une mémoire 310 structurée en sous-mémoires 301_1,..., 301_I$_{Max}$, chaque sous-mémoire correspondant à un niveau de résolution donné. Chaque sous-mémoire est structurée en zones. Lorsque l'indice I_0 est reçu, le serveur renvoie au terminal les coordonnées des points de tous les polygones stockés dans cette sous-mémoire.

Le terminal incorpore en outre des moyens de sélection 303 pour filtrer ces points de façon à ne conserver que les points associés aux zones du jeu de zones.

La figure 5 montre une partition d'un plan en zones indexées (k1, k2, I), k1 indiçant les lignes, k2 les colonnes et I les niveaux de résolution. Cette partition peut permettre de limiter la quantité de données à charger quand seulement une partie de cette vue est à afficher. En effet, pour afficher une zone de visualisation 550, il suffit de charger les images des zones (1, 1, 2), (2, 1, 2), (3, 1, 2), (1, 2, 2), (2, 2, 2), (3, 2, 2), (1, 3, 2), (2, 3, 2) et (3, 3, 2).

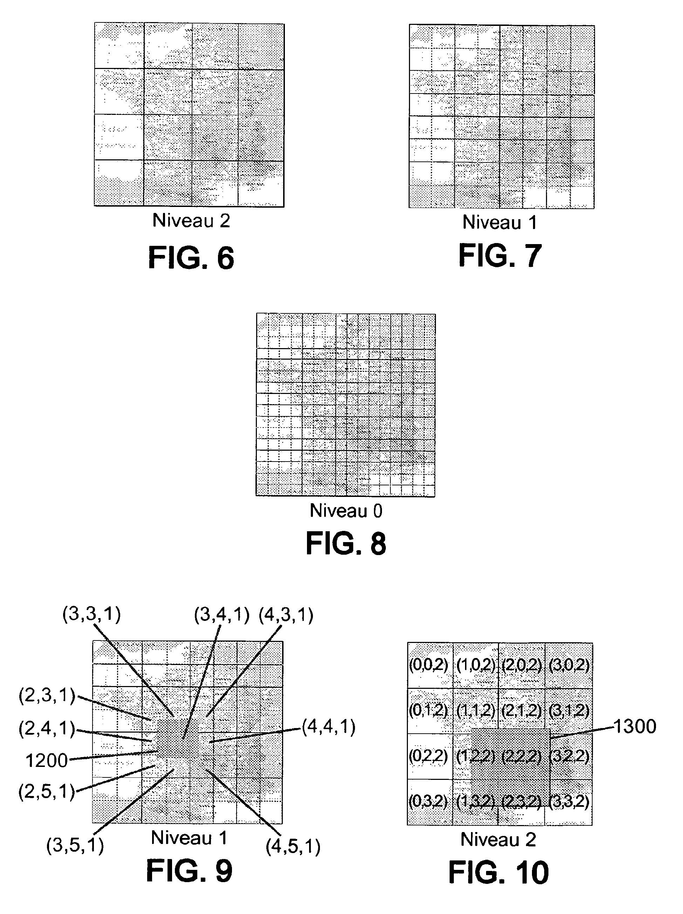

L'organisation en zones permet d'appliquer les concepts de la multi-résolution, comme représenté sur les figures 6, 7, 8, correspondant respectivement à une résolution de I=2, I=1 et I=0. Chaque zone à un niveau de précision I est divisée en quatre sous-zones identiques à un niveau de précision supérieur I - 1 et ainsi de suite. Ainsi, une zone (k1, k2, I) occupe le même espace géographique que les quatre zones (2k1, 2k2, I - 1), (2k1 + 1, 2k2, I - 1), (2k1, 2k2 + 1, I - 1), (2k1 + 1, 2k2 + 1, I - 1) réunies.

Avec ce procédé on peut toujours déterminer neuf zones de sorte que n'importe quelle fenêtre de visualisation 1200, 1300 reste dans ces neuf zones (voir les figures 9 et 10). L'image utilisée pour n'importe quelle zone à n'importe quel niveau de précision a toujours la même taille. Les avantages du procédé sont les suivants :

- Préservation de la mémoire : on s'assure que la quantité totale de données chargées est toujours inférieure ou égale à neuf fois la taille d'une zone. Dans un mode de réalisation, on charge les points d'une zone entière même si seulement une partie de cette zone correspond à de l'information affichable. Dans un autre mode de réalisation, on se limite aux parties de zones correspondant à de l'information affichable.
- Multi-résolution : comme neuf zones à un niveau de précision I couvrent quatre fois moins d'espace que neuf zones à un niveau de précision I+1, la qualité des données augmente au fur et à mesure que l'on zoome (elle est multipliée par quatre).
- Format : les images sont carrées ou rectangulaires et les zones le sont, il est relativement facile de les faire coïncider.

Une telle organisation peut contraindre à stocker environ 33% de données en plus (conformément au *mipmap*), mais ce stockage peut éventuellement être optimisé, par compression par exemple, de façon à réduire le volume des données stockées.

Les figures 11 à 14 illustrent un procédé de détermination de listes de points correspondant à des polygones découpés, à partir des coordonnées de points d'un polygone recouvrant en partie plusieurs zones. On considère une zone Z = (Bo, ... ,B$_3$) et un polygone P = (A$_0$, ... ,A$_{N-1}$),

Pour des raisons de simplicité de notation, n indice ici les points du polygone P et m les points des coins de la zone B, avec

$$B_{m+4} = B_m \text{ et } A_{n+N} = A_n.$$

Afin de distinguer les surfaces et frontières, on note Z la surface de la zone et $\partial Z$ le bord de la zone ; on note P la surface du polygone et $\partial P$ le bord du polygone.

Lors de l'étape de test 102 sur le figure 1, on examine si :

- $Z \cap P$ est vide (pas d'intersection), dans ce cas, on recommence le test en choisissant une autre zone, de façon à parcourir toutes les zones jusqu'à ce que $Z \cap P$ ne soit pas vide,
- $P \subset Z$ : l'intersection est le polygone lui-même et $Z \cap P = P$. On stocke alors le polygone de façon à l'associer en mémoire à cette zone (étape 105 sur la figure 1).
- $Z \subset P$, c'est-à-dire l'intersection est la zone elle-même et $Z \cap P = Z$.

Dans ce cas, on stocke les coordonnées des coins de la zone en tant que coordonnées d'un polygone découpé.

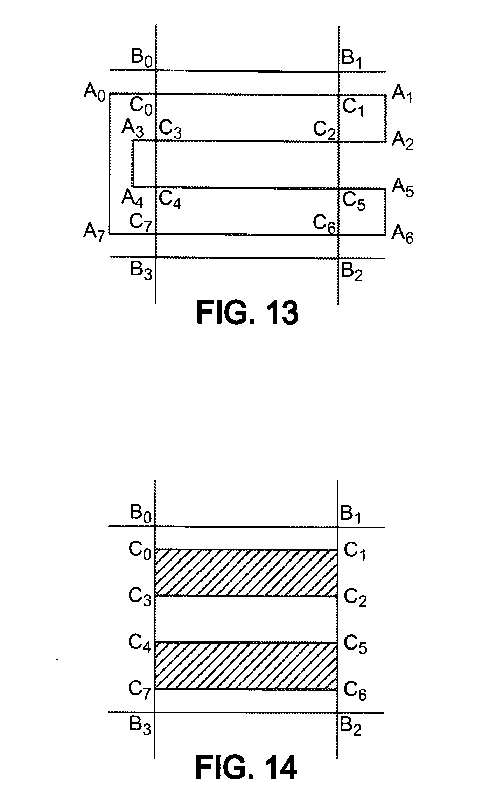

Si on détecte une intersection non-triviale, le procédé décrit ci-dessous est exécuté. On peut remarquer que l'intersection $Z \cap P$ ne donne pas nécessairement un unique polygone. Il peut très bien s'agir de plusieurs polygones comme les deux rectangles sur la figure 14. Le calcul de $Z \cap P$ se fait en quatre étapes décrites ci-après.

- On décompose arbitrairement $\partial Z$ en quatre segments ouverts à droite disjoints [Bo,B$_1$[, [B$_1$,B$_2$[, [B$_2$,B$_3$[ et [B$_3$,B$_0$[.

Pour chaque segment ouvert $]A_n, A_{n+1}[$, on cherche les intersections avec les segments ouverts à droite $[B_m, B_{m+1}[$. Pour déterminer l'intersection des segments $]A_n, A_{n+1}[ \cap [B_m, B_{m+1}[$, on cherche d'abord l'intersection des droites $(A_n, A_{n+1}) \cap (B_m, B_{m+1})$. Si elle existe, elle est constituée d'un unique point C. Il faut alors calculer les produits scalaires:

$$f_P(C) = \frac{\langle \overrightarrow{A_n C}, \overrightarrow{A_n A_{n+1}} \rangle}{\| \overrightarrow{A_n A_{n+1}} \|^2} \text{ et } f_Z(C) = \frac{\langle \overrightarrow{B_m C}, \overrightarrow{B_m B_{m+1}} \rangle}{\| \overrightarrow{B_m B_{m+1}} \|^2}. \quad (1)$$

Si $f_P(C)$ appartient à $]0, 1[$ et $f_Z(C)$ appartient à $[0, 1[$ alors $\{C\} = ]A_n, A_{n+1}[ \cap [B_m, B_m +_1[$. Etant donné que la zone est rectangulaire, l'intersection $]A_n, A_{n+1}[ \cap \delta Z$ contient au plus deux points.

Sur la figure 13, on trouve par exemple que $]A_0, A_1[ \cap \partial Z = \{C_0, C_1\}$. On insère alors $C_0$ et $C_1$ entre $A_0$ et $A_1$ dans la liste, en tenant compte du sens de parcours. Pour déterminer le sens de parcours, il suffit de reprendre les valeurs $fp(C_0)$ et $fp(C_1)$: plus elles sont faibles plus les points sont proches de $A_0$, plus elles sont élevées, plus les points sont proches de $A_1$. Le sens de parcours est donné à $f_P$ croissant.

En reprenant le procédé pour chaque segment, on définit un nouveau polygone, correspondant dans notre exemple à la liste de points :

$$P' = (A_0, C_0, C_1, A_1, A_2, C_2, C_3, A_3, A_4, C_4, C_5, A_5, A_6, C_6, C_7, A_7). \quad (2)$$

On pourra alors remarquer qu'intrinsèquement, les polygones P' et P coïncident exactement.

-   On supprime simplement les sommets de P' qui sont en dehors de la zone Z afin d'obtenir un polygone intégralement contenu dans la zone. On définit encore un nouveau polygone qui vaut dans notre exemple :

$$P'' = (C_0, C_1, C_2, C_3, C_4, C_5, C_6, C_7) \quad (3)$$

-   Si l'on se rapporte à l'exemple des figures 11 à 14, on s'attend à trouver deux polygones alors qu'après exécution du procédé décrit ci-dessus, on n'obtient qu'une seule liste de points. On peut en effet remarquer que sur cet exemple, les points $C_3$ et $C_4$ sont inclus dans le segment $]C_7, C_0[$. On peut également noter que la partie comprise entre les points $C_3$ et $C_4$ est "plate" et qu'elle sert de jonction entre les deux rectangles que l'on s'attend à obtenir.

Aussi, avantageusement, on effectue une étape supplémentaire consistant à insérer en double, en triple, etc. les points du polygone qui sont sur un autre segment.

Sur cet exemple, on considère le segment ouvert $]C_0, C_7[$. On parcourt les sommets du polygone dans le sens inverse et on insère ces sommets s'ils sont entre $C_0$ et $C_7$. On tombe d'abord sur $C_4$ puis sur $C_3$ que l'on insère dans cet ordre.

On itère le procédé sur chaque segment et on ajoute le premier point à la fin. On définit ainsi un nouveau polygone qui vaut dans cet exemple :

$$P''' = (C_0, C_1, C_2, C_3, C_4, C_5, C_6, C_7, C_4, C_3, C_0) \quad (4)$$

On pourra remarquer que les polygones P''' et P'' coïncident exactement.

-   Pour scinder le polygone, on cherche les points en double entre lesquels il n'y a pas de points en double. Sur cet exemple, le point $C_0$ apparaît deux fois (au début et à la fin). Entre les deux points $C_0$ de la liste, le point $C_3$ apparaît deux fois. Egalement, entre les deux points $C_3$ de la liste, le point $C_4$ apparaît deux fois. Entre les deux points $C_3$ de la liste, il n'y a aucun point en double.

On considère la liste $Q_0$ des points entre les deux occurrences du point $C_4$ et la liste $P_0$ restante :

$$Q_0 = (C_4,C_5,C_6,C_7) \text{ et } R_0 = (C_0,C_1,C_2,C_3,C_4,C_3,C_0) \qquad (5)$$

On réitère le procédé sur $R_0$ et on trouve :

$$Q_1 = (C_3,C_4) \text{ et } R_1 = (C_0,C_1,C_2,C_3,C_0) \qquad (6)$$

On réitère le procédé sur $R_1$ et on trouve :

$$Q_2 = (C_0,C_1,C_2,C_3) \text{ et } R_1 = (C_0) \qquad (7)$$

La liste restante est négligeable (un seul point) donc on met fin aux itérations. L'intersection du polygone P et de la zone Z est constituée des polygones $Q_0$, $Q_1$ et $Q_2$, mais le polygone $Q_1$ comporte seulement deux points et ne définit donc pas une base polygonale. On ne conserve que $Q_0$ et $Q_2$.

Ainsi, on applique ce calcul d'intersection à tous les polygones et à toutes les zones de tous les niveaux de précision. On peut appliquer un principe de réduction triangulaire tel que décrit dans la demande française FR2903518, lorsque les paramètres de navigation correspondent au passage à un niveau moins précis, en prenant quatre comme critère d'agrégation (puisqu'on diminue la précision par quatre). La réduction doit néanmoins être appliquée avant le calcul d'intersection pour que les intersections du polygone soient raccordées entre elles. Bien entendu, on augmente encore la taille des données mais chaque polygone est bien contenu dans une zone. L'organisation profite alors de toutes les propriétés déjà décrites.

**Revendications**

1. Procédé, mis en oeuvre par des moyens informatiques, de traitement, en vue d'un affichage sur un écran d'un terminal, d'une image numérique représentant au moins une partie d'un ensemble d'objets d'un point de vue défini par des paramètres de navigation, ledit ensemble d'objet étant paramétré par une liste de données d'image comprenant, pour au moins un objet dudit ensemble, des coordonnées ($\{x_{ij}, y_{ij}\}$) de points d'un polygone dans un plan, le procédé comprenant un pré-traitement d'une liste de données d'images paramétrant un ensemble d'objets, en vue dudit affichage sur un écran de terminal d'une image numérique représentant au moins une partie dudit ensemble d'objets,

   ladite liste de données d'image comprenant, pour au moins un objet dudit ensemble, des coordonnées de points d'un polygone dans un plan ($\{x_{ij}, y_{ij}\}$), ledit plan étant partitionné en un ensemble de zones ($\{Z_{k,l}\}$)

   dans lequel, pour au moins un polygone de la liste de données d'images :

   - on teste (102) si ledit polygone appartient à une pluralité de zones,
   - si le test montre que le polygone appartient à une pluralité de zones, on détermine (103) à partir des coordonnées des points dudit polygone, des coordonnées de points d'un polygone découpé ($Q_0$, $Q_1$), chaque polygone découpé appartenant à une seule zone associée, et on stocke (104) le polygone découpé dans une mémoire structurée par zones,
   - si le test montre que le polygone appartient à une seule zone, on stocke (105) ledit polygone dans ladite mémoire,

   de sorte que chaque polygone stocké dans ladite mémoire appartient à une seule zone associée,

   et pour déterminer des coordonnées de points d'un polygone découpé à partir de coordonnées de points d'un polygone appartenant à une pluralité de zones, pour une zone de ladite pluralité :

   on détermine les points d'intersections de segments du polygone avec les frontières de ladite zone,

   on insère ces points d'intersection dans une liste de points ordonnée correspondant au polygone, entre les points extrémités des segments intersectés correspondants,

   on supprime de ladite liste les points n'appartenant pas à ladite zone, on recherche si des points de la liste appartiennent à un segment défini par d'autres points de la liste, et le cas échéant on insère ces points dans la liste, entre ces autres points,
on recherche les points apparaissant en double dans la liste, et entre lesquels il n'y a pas d'autre points apparaissant en double, et le cas échéant on définit une liste des points entre les deux occurrences desdits points apparaissant en double, et une liste comprenant les autres points restants,
et on réitère cette étape menant à ces deux listes sur chaque segment jusqu'à ce que le contenu de la liste comprenant les autres points restants devienne négligeable.

**2.** Procédé selon la revendication 1,
dans lequel, pour le traitement d'image,
ledit plan est partitionné en zones ($\{Z_{k,l}\}$),
chaque polygone appartenant à une pluralité de zones est stocké dans une mémoire sous la forme d'une pluralité de polygones découpés, chaque polygone découpé appartenant à une seule zone, de sorte que chaque polygone stocké dans ladite mémoire est associé à une seule zone par la mise en oeuvre du procédé selon la revendication 1, ledit procédé comprenant :

déterminer (402) en fonction des paramètres de navigation un jeu de zones de ladite partition dudit plan,
pour chaque zone dudit jeu de zones, choisir (403) les coordonnées des points des polygones stockés dans la mémoire et associés à ladite zone pour le calcul d'une représentation, destinée à être affichée sur l'écran, de l'ensemble d'objets selon les paramètres de navigation.

**3.** Procédé selon la revendication 2, dans lequel on prévoit plusieurs niveaux de résolution, chaque niveau de résolution ($l\_0$) correspondant à un ensemble de zones ($\{Z_{k,l\_0}\}$) constituant une partition du plan et à un ensemble de polygones stockés ($\{P_{k,l\_0}\}$), chaque polygone stocké dudit ensemble appartenant à une seule zone dudit ensemble de zones.

**4.** Procédé selon la revendication 3, comprenant, préalablement à l'étape de détermination du jeu de zones, une étape de détermination d'une partition ($l\_0$) correspondant à un niveau de résolution fonction des paramètres de navigation.

**5.** Procédé selon l'une des revendications 2 à 4, dans lequel la liste de données d'image comprend, pour au moins une zone, un jeu d'au moins une texture associé à ladite zone.

**6.** Dispositif de traitement (200), en vue d'un affichage sur un écran (209) d'un terminal (204) d'une image numérique représentant au moins une partie d'un ensemble d'objets d'un point de vue défini par des paramètres de navigation, **caractérisé en ce qu'**il comporte des moyens pour la mise en oeuvre du procédé selon l'une des revendications précédentes.

**7.** Dispositif selon la revendication 6, **caractérisé en ce qu'**il comporte une mémoire de stockage (310) d'une liste de données d'images paramétrant un ensemble d'objets, pour l'affichage sur un écran d'un terminal d'une image numérique représentant au moins une partie dudit ensemble d'objets,
la liste de données d'image comprenant, pour au moins un objet dudit ensemble, des coordonnées de points d'un polygone dans un plan,
dans lequel la mémoire est structurée par zones dudit plan,
et dans lequel chaque polygone appartenant à une pluralité de zones est stocké sous la forme d'une pluralité de polygones découpés par la mise en oeuvre du procédé de la revendication 1, chaque polygone découpé appartenant à une seule zone,
de sorte que chaque polygone stocké dans la mémoire appartient à une seule zone associée.

**8.** Dispositif selon la revendication 7, ladite mémoire étant agencée de façon à stocker en outre, pour au moins une zone, un jeu d'au moins une texture associé à ladite zone.

**9.** Programme d'ordinateur comprenant des instructions pour mettre en oeuvre les étapes d'un procédé selon l'une des revendications 1 à 5, lors d'une exécution du programme par des moyens de traitement.

**Claims**

**1.** Method of processing a digital image representing at least a part of a set of objects from a viewpoint defined by navigation parameters, implemented by electronic data processing means with a view to obtaining a display on a screen of a terminal, said set of objects being parameterised by a list of image data comprising co-ordinates ($\{x_{ij},$ $y_{ij}\}$) of points of a polygon in a plane for at least one object of said set,

the method comprising pre-processing a list of image data parameterising a set of objects with a view to obtaining said display on a terminal screen of a digital image representing at least a part of said set of objects,

said list of image data comprising co-ordinates of points of a polygon in a plane ($\{x_{ij}, y_{ij}\}$) for at least one object of said set, said plane being sub-divided into a set of zones ($\{Z_{k,l}\}$)

in which, for at least one polygon in the list of image data:

- a test (102) is run to ascertain whether said polygon belongs to a plurality of zones,
- if the test shows that the polygon belongs to a plurality of zones, co-ordinates of points of a cut polygon ($Q_0$, $Q_1$) are determined (103) on the basis of the co-ordinates of the points of said polygon, each cut polygon belonging to a single associated zone, and the cut polygon is stored (104) in a memory structured by zones,
- if the test shows that the polygon belongs to a single zone, said polygon is stored (105) in said memory,
  so that each polygon stored in said memory belongs to a single associated zone,

**characterised in that**, in order to determine co-ordinates of points of a cut polygon on the basis of co-ordinates of points of a polygon belonging to a plurality of zones, for a zone of said plurality:

the points at which segments of the polygon intersect with the borders of said zone are determined,

these intersection points are inserted in an ordered list of points corresponding to the polygon, between the end points of the corresponding intersected segments,

the points that do not belong to said zone are deleted from said list,

a search is run to ascertain whether points in the list belong to a segment defined by other points in the list and these points are inserted in the list between these other points, where applicable,

a search is run to find the points which appear in duplicate in the list and between which no other points appear in duplicate and, where applicable, a list of points between the two occurrences of said points appearing in duplicate is defined, and a list comprising the remaining other points is defined,

and **in that** this step resulting in these two lists is reiterated on each segment until the content of the list comprising the remaining other points becomes negligible.

2. Method as claimed in claim 1,
   in which, in order to process an image,
   said plane is sub-divided into zones ($\{Z_{k,l}\}$), each polygon belonging to a plurality of zones is stored in a memory in the form of a plurality of cut polygons, each cut polygon belonging to a single zone so that each polygon stored in said memory is associated with a single zone by implementing the method as claimed in claim 1,
   said method comprising:

   determining (402) a set of zones of said sub-division of said plane as a function of the navigation parameters,
   for each zone of said set of zones, selecting (403) the co-ordinates of points of polygons stored in the memory and associated with said zone in order to calculate a representation of the set of objects to be displayed on the screen as a function of the navigation parameters.

3. Method as claimed in claim 2, in which several resolution levels are provided, each resolution level (1_0) corresponding to a set of zones ($\{Z_{k,l\_0}\}$) constituting a sub-division of the plane and to a set of stored polygons ($\{P_{k,l\_0}\}$), each stored polygon of said set belonging to a single zone of said set of zones.

4. Method as claimed in claim 3, comprising, prior to the step of determining the set of zones, a step of determining a sub-division (l_0) corresponding to a resolution level as a function of the navigation parameters.

5. Method as claimed in one of claims 2 to 4, in which the list of image data comprises, for at least one zone, a set of at least one texture associated with said zone.

6. Device for processing (200) a digital image representing at least a part of a set of objects from a viewpoint defined by navigation parameters with a view to obtaining a display on a screen (209) of a terminal (204), **characterised in that** it comprises means for implementing the method as claimed in any one of the preceding claims.

7. Device as claimed in claim 6, **characterised in that** it comprises a memory (310) for storing a list of image data parameterising a set of objects in order to display a digital image representing at least a part of said set of objects on a screen of a terminal,

the list of image data comprising co-ordinates of points of a polygon in a plane for at least one object of said set, in which the memory is structured on the basis of zones of said plane, and in which each polygon belonging to a plurality of zones is stored in the form of a plurality of cut polygons by implementing the method as claimed in claim 1, each cut polygon belonging to a single zone, so that each polygon stored in the memory belongs to a single associated zone.

8. Device as claimed in claim 7, said memory being configured so as to store in addition, for at least one zone, a set of at least one texture associated with said zone.

9. Computer programme comprising instructions for implementing the steps of a method as claimed in one of claims 1 to 5 when the programme is run by processing means.

**Patentansprüche**

1. Computergestützt ausgeführtes Bearbeitungsverfahren mit dem Ziel, auf einem Bildschirm eines Terminals ein digitales Bild anzuzeigen, welches wenigstens einen Teil einer Objektgruppe von einem durch Navigationsparameter definierten Standpunkt aus darstellt, wobei die Objektgruppe anhand einer Bilddatenliste parametrisiert wird, welche für wenigstens ein Objekt der Gruppe die Koordinaten ($\{x_{ij}, y_{ij}\}$) der Punkte eines Polygons in einer Ebene umfasst, wobei das Verfahren im Hinblick auf die Anzeige eines digitalen Bildes, welches wenigstens einen Teil der Objektgruppe darstellt, auf einem Terminalbildschirm eine Vorverarbeitung einer eine Objektgruppe parametrisierenden Bilddatenliste umfasst, wobei die Bilddatenliste für wenigstens ein Objekt der Gruppe die Koordinaten der Punkte eines Polygons in einer Ebene ($\{x_{ij}, y_{ij}\}$) umfasst, wobei die Ebene in eine Zonengruppe ($\{Z_{kj}\}$) aufgeteilt wird, in der für wenigstens ein Polygon der Bilddatenliste:

- geprüft wird (102), ob das Polygon einer Mehrzahl von Zonen angehört,
- wenn die Prüfung zeigt, dass das Polygon einer Mehrzahl von Zonen angehört, basierend auf den Koordinaten der Punkte des Polygons die Koordinaten der Punkte eines ausgeschnittenen Polygons ($Q_0$, $Q_1$) bestimmt (103) werden, wobei jedes ausgeschnittene Polygon einer einzigen zugeordneten Zone angehört, und das ausgeschnittene Polygon in einem in Zonen strukturierten Speicher gespeichert (104) wird,
- wenn die Prüfung zeigt, dass das Polygon einer einzelnen Zone angehört, das Polygon in dem Speicher gespeichert (105) wird,

sodass jedes in dem Speicher gespeicherte Polygon einer einzelnen zugeordneten Zone angehört, **dadurch gekennzeichnet, dass** zum Bestimmen der Koordinaten der Punkte eines ausgeschnittenen Polygons basierend auf den Koordinaten von Punkten eines einer Mehrzahl von Zonen zugehörigen Polygons für eine Zone der genannten Mehrzahl:

die Schnittpunkte der Segmente des Polygons mit den Grenzen der Zone bestimmt werden, diese Schnittpunkte in einer dem Polygon entsprechenden, geordneten Punkteliste zwischen den Endpunkten der entsprechenden überschneidenden Segmente eingefügt werden, aus der Liste diejenigen Punkte entfernt werden, die nicht der Zone angehören, geprüft wird, ob Punkte der Liste einem durch andere Punkte der Liste definierten Segment angehören, und gegebenenfalls diese Punkte zwischen diesen anderen Punkten der Liste eingefügt werden. doppelt in der Liste erscheinende Punkte gesucht werden, zwischen denen es keine anderen doppelt erscheinenden Punkte gibt, und gegebenenfalls eine Liste der Punkte zwischen den beiden Einträgen der doppelt erscheinenden Punkte sowie eine Liste der anderen, verbleibenden Punkte definiert wird, und dadurch, dass dieser Schritt, der zu diesen zwei Listen führt, für jedes Segment wiederholt wird bis der Inhalt der die anderen, verbleibenden Punkte umfassenden Liste vernachlässigbar wird.

2. Verfahren nach Anspruch 1, bei welchem für die Bildbearbeitung die Ebene in Zonen ($\{Z_{k,l}\}$) aufgeteilt wird, wobei jedes einer Mehrzahl von Zonen angehörende Polygon in einem Speicher in Form einer Mehrzahl von ausgeschnittenen Polygonen gespeichert wird, so dass jedes in dem Speicher gespeicherte Polygon durch Ausführen des Verfahrens nach Anspruch 1 einer einzigen Zone zugeordnet wird, wobei das Verfahren umfasst:

abhängig von den Navigationsparametern Bestimmen (402) eines Satzes von Zonen der Partition der Ebene, für jede Zone des Satzes von Zonen Auswählen (403) der Koordinaten der Punkte der im Speicher gespeicherten Polygone, die der Zone für die Berechnung einer Darstellung zugeordnet sind, welche für die Abbildung der Objektgruppe auf einem Bildschirm gemäß den Navigationsparametern bestimmt ist.

3. Verfahren nach Anspruch 2, bei welchem mehrere Auflösungsstufen vorgesehen werden, wobei jede Auflösungsstufe ($I\_0$) einer Gruppe eine Partition der Ebene bildender Zonen ($\{Z_{k,I\_0}\}$) sowie einer Gruppe der gespeicherten Polygone ($\{P_{k,I\_0}\}$) entspricht, wobei jedes gespeicherte Polygon der Gruppe einer einzigen Zone der Zonengruppe angehört.

4. Verfahren nach Anspruch 3, welches vor dem Schritt der Bestimmung des Satzes von Zonen einen Schritt der Bestimmung einer Partition ($I\_0$) umfasst, welche einer Auflösungsstufe in Abhängigkeit von den Navigationsparametern entspricht.

5. Verfahren nach einem der Ansprüche 2 bis 4, bei welchem die Bilddatenliste für wenigstens eine Zone einen Satz von wenigstens einer der Zone zugeordneten Struktur umfasst.

6. Bearbeitungsvorrichtung (200) mit dem Ziel, auf einem Bildschirm (209) eines Terminals (204) ein digitales Bild anzuzeigen, welches wenigstens einen Teil einer Objektgruppe von einem durch Navigationsparameter definierten Standpunkt aus darstellt, **dadurch gekennzeichnet, dass** sie Mittel für die Ausführung des Verfahrens gemäß einem der vorangehenden Ansprüche umfasst.

7. Vorrichtung nach Anspruch 6, **dadurch gekennzeichnet, dass** sie einen Speicherort (310) einer eine Objektgruppe parametrisierenden Bilddatenliste für die Anzeige eines digitalen Bildes, welches wenigstens einen Teil der Objektgruppe darstellt, auf einem Terminalbildschirm umfasst,
wobei die Bilddatenliste für wenigstens ein Objekt der Gruppe die Koordinaten eines Polygons in einer Ebene umfasst,
wobei der Speicher in Zonen der Ebene strukturiert ist,
und wobei jedes einer Mehrzahl von Zonen angehörendes Polygon durch Ausführung des Verfahrens nach Anspruch 1 in Form einer Mehrzahl ausgeschnittener Polygone gespeichert ist,
so dass jedes im Speicher gespeicherte Polygon einer einzigen zugeordneten Zone angehört.

8. Vorrichtung nach Anspruch 7, wobei der Speicher dazu angeordnet ist, ferner für wenigstens eine Zone einen Satz von wenigstens einer der Zone zugeordneten Struktur zu speichern.

9. Computerprogramm, welches Anweisungen zum Ausführen der Schritte eines Verfahrens nach einem der Ansprüche 1 bis 5 bei einer Ausführung des Programms mittels Bearbeitungsmitteln umfasst.

$\left\{ \left\{ x_{ij}, y_{ij} \right\}_j, Z_i \right\}_i$ —100    $\left\{ \left\{ Z_{k,\ell} \right\}_k \right\}_\ell$ —101

$i := 1 ; \ell := 1$

102

$\exists k, k'$
$P_i \cap Z_{k,\ell} \neq \varnothing$
&&
$P_i \cap Z_{k',\ell} \neq \varnothing$
?

N

O

Determiner $Q_0, Q_1...$ —103

Stocker $Q_0, Q_1...$ dans une mémoire $MEM_\ell$

104

Stocker $P_i$ dans une mémoire $MEM_\ell$

105

$i++$

$i := 1$

$\ell++$

N

$i == i_{MAX}$ ?

N

$\ell == \ell_{MAX}$ ?

FIN

**FIG. 1**

13

FIG. 2

FIG. 3

$$\vec{u}, \varphi_x, \varphi_z, \varepsilon \quad \text{—} 401$$

Determiner un jeu
de zones $Z_{k',\ell'}$ —402

Choisir les polygones
associés aux zones
$Z_{k',\ell'}$ du jeu de zones —403

3D —404

Afficher la
representation calculée —405

## FIG. 4

| | | | |
|---|---|---|---|
| (0,0,2) | (1,0,2) | (2,0,2) | (3,0,2) |
| (0,1,2) | (1,1,2) | (2,1,2) | (3,1,2) |
| (0,2,2) | (1,2,2) | (2,2,2) | (3,2,2) |
| (0,3,2) | (1,3,2) | (2,3,2) | (3,3,2) |

—550

## FIG. 5

Niveau 2

## FIG. 6

Niveau 1

## FIG. 7

Niveau 0

## FIG. 8

(3,3,1)   (3,4,1) (4,3,1)

(2,3,1)

(2,4,1)

1200

(2,5,1)

(4,4,1)

(3,5,1)   Niveau 1   (4,5,1)

## FIG. 9

(0,0,2) (1,0,2) (2,0,2) (3,0,2)

(0,1,2) (1,1,2) (2,1,2) (3,1,2)

1300

(0,2,2) (1,2,2) (2,2,2) (3,2,2)

(0,3,2) (1,3,2) (2,3,2) (3,3,2)

Niveau 2

## FIG. 10

**FIG. 11**

**FIG. 12**

**FIG. 13**

**FIG. 14**

**EP 2 192 555 B1**

**RÉFÉRENCES CITÉES DANS LA DESCRIPTION**

**Documents brevets cités dans la description**

- US 7353114 B
- US 4972319 A
- FR 2903518